# EUROPEAN PATENT APPLICATION

(11) **EP 0 671 584 A1**
(43) Date of publication of application: **13.09.1995**
(21) Application number: 95301525.2
(22) Date of filing: 08.03.1995
(51) Int. Cl.: F16L 41/06

(54) **Improvements in or relating to tube couplings**

(30) Priority: 09.03.1994 GB 9404548
(71) Applicant: Guest, John Derek, Maidenhead, Berkshire SL6 2EX (GB)
(72) Inventor: Guest, John Derek, Maidenhead, Berkshire SL6 2EX (GB)
(74) Representative: Bayliss, Geoffrey Cyril

(57) **Abstract**

The disclosure relates to a tube coupling for connecting one tube (10) to another (11) comprising a coupling body (12) having a throughway and a clamping arrangement (25) for attaching the coupling body to a main tube (10) with the throughway extending transversely of the main tube. A resilient seal (15) is mounted in the throughway having a self-closing orifice, the seal being formed so that it is openable by a tubular probe (20) or a piercing tool (56) inserted through the orifice in one direction and so that a pressure differential across the seal in the opposite direction probe or tool when one or other of the latter is present. A probe (56) can thus be inserted through the coupling body and seal to create an orifice (10a) in the main tube and is then withdrawn and the seal (16) closes up to allow flow through the main tube to continue without loss of fluid. A subsidiary tube (11) can then be inserted in the coupling body through the seal (15) to communicate with the main tube (10).

## Description

This invention relates to tube couplings and is particularly although not exclusively applicable to a coupling for providing a connection between a main tube and a subsidiary tube.

There are a number of commonly used ways for making a branch connection to a pipe or tube. One way involves cutting through the tube and inserting a T-shaped connector in the tube with the cross-piece or arms of the connector in line with the pipe or tube and the leg of the connector connected to the branch pipe or tube. Another way of making a branch connection in a pipe or tube involves forming a hole in the pipe or tube and securing the branch pipe or tube to the main pipe or tube by welding, soldering or adhesive according to the materials used or by a separate clamping device.

This invention provides a tube coupling for connecting one tube to another comprising a coupling body having a throughway, means for connecting the coupling body to respective tubes, a seal having a resilient self-closing orifice mounted in the throughway, the seal being formed so that it is openable by a probe inserted through the orifice in one direction and so that a pressure differential across the seal in the opposite direction biases the seal orifice closed or closed around the probe when the latter is present.

The self-closing seal may be of tubular form having a portion in which the tube walls converge to seal together and through which said probe may be inserted for flow of fluid through the coupling body.

More specifically, the resilient seal may comprise a cylindrical portion terminating in a portion which tapers in one cross-section to form an elongate openable "ducks bill" shaped mouth and the probe is insertable through the tubular portion into the tapered portion to open the mouth of the seal.

In addition a sleeve may be mounted within the tubular portion of the seal to support the seal against the wall of the coupling body and to provide a guide for the probe to be inserted through the seal.

In any of the above arrangements the probe may project from one end of the coupling body for connection to an end of one tube and means may be provided for connecting the other end of the coupling body to another tube.

Also in any of the above arrangements said other end of the coupling body may be adapted to bear against a side wall of tube, means may be provided for mounting the coupling body on the tube and said end of the coupling body may have an aperture to register with an aperture in the tube for flow of fluid between the tube and coupling body.

In the latter arrangement piercing tool may be inserted through the coupling body prior to insertion of the probe to create an aperture in the side wall of the tube to which the coupling body is secured, the tool being sealed by the self-closing seal to prevent loss of fluid therefrom.

The following is a description of some specific embodiments of the invention reference being made to the accompanying drawings in which:
FIGURE 1 is a diagrammatic view of a coupling between a main conduit and a branch conduit embodying a seal for opening and closing the coupling with the seal shown in the closed position;
FIGURE 2 is a similar view to Figure 1 with the seal shown open;
FIGURE 3 shows the coupling with an arrangement for securing the coupling to the main conduit and a tool for piercing a hole in the wall of the conduit to communicate subsidiary conduit with the main conduit;
FIGURE 4 shows the coupling body of Figure 3 after the piercing tool has been removed and the subsidiary conduit connected to the coupling body with a probe on the subsidiary conduit extending through the seal in the coupling body to provide flow between the main and subsidiary conduit;
FIGURES 5 to 8 show the step by step operation of applying the coupling body to a main conduit and piercing an aperture in the conduit, fitting a tube connected to the coupling body and inserting a tube through the connector into the coupling body to open the seal and provide fluid flow between the main conduit and tube, and
FIGURES 9 to 13 show the step by step operation of a furthe construction according to the invention.

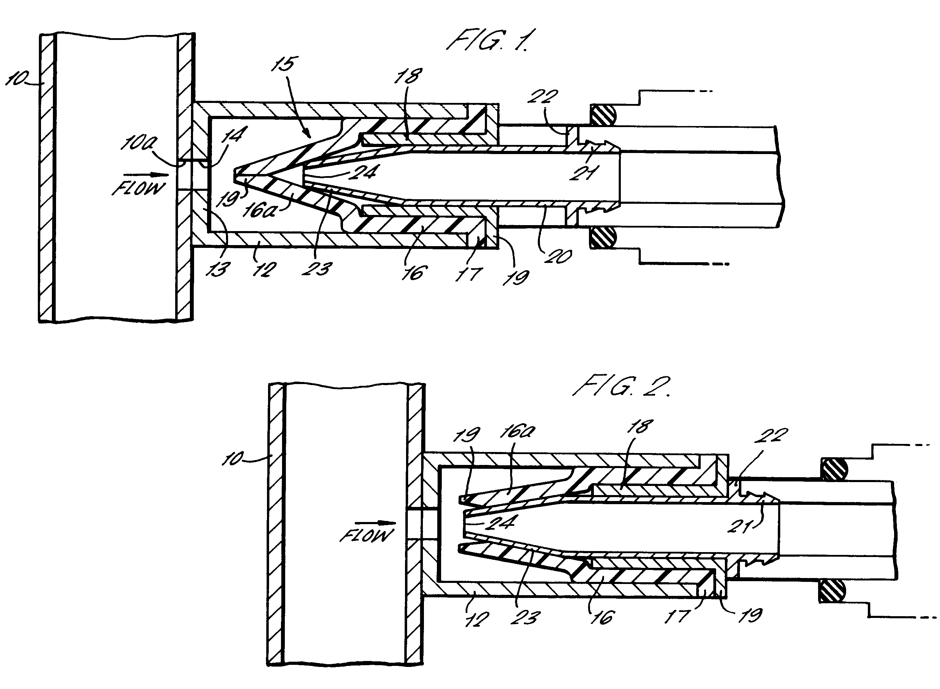

Referring firstly to Figure 1 of the drawings, there is shown a main tube 10 through which a liquid or gas flows and to which a subsidiary tube indicated at 11 is to be coupled. To effect the coupling, a generally cylindrical coupling body 12 is mounted by a clamping arrangement which will be described later on one side of the main tube. The coupling body 12 has an end wall 13 shaped to bear against the curved outer surface of the tube 10. The end wall has a small central aperture indicated at 14 and the tube has an aperture 10a in alignment with aperture 14 and formed by a piercing tool inserted through the coupling body as described in greater detail later.

The coupling body 12 contains a "ducks bill" shaped self-closing resilient seal indicated generally at 15. The seal comprises a cylindrical portion 16 which engages in the cylindrical wall of the coupling body 12 and is formed with an out turned flange 17 at one end which engages around the opposite end of the coupling 12 to the end wall 13. The seal is held in place by an inner sleeve 18 which engages inside the tubular portion of the seal and has an out turned flange 19 which engages against the flange 17 of the seal. The seal 16 is formed with a portion 16a in the shape of a "ducks bill" which tapers or converges in one plane to an elongate mouth 19 where the walls of the seal meet in sealing engagement as shown in Figure 1 when not otherwise held apart.

A probe 20 is provided at the end of the subsidiary tube 11 to be connected to the main tube 10. The probe has a short externally barbed end portion 21 ending an encircling shoulder 22. The barbed section of the probe is forced into the open end of the tube 11 until the end of the tube engages the shoulder 22. The main body of the probe 20 is a sliding fit in the sleeve 18 in the coupling body and is formed at its other end with a tapered or nozzle portion 23 terminating in a narrow open slit 24. The probe 20 inserted through the sleeve 18 into the tapered "ducks bill" portion of the seal. The seal is thereby opened to allow flow between the main and subsidiary tubes via the probe. The annular shoulder 22 on the probe engages the retaining ring 19 to limit insertion of the probe through the seal and the "ducks bill" portion of the seal seals with the outside of the probe to prevent loss of fluid around the outer side of the probe.

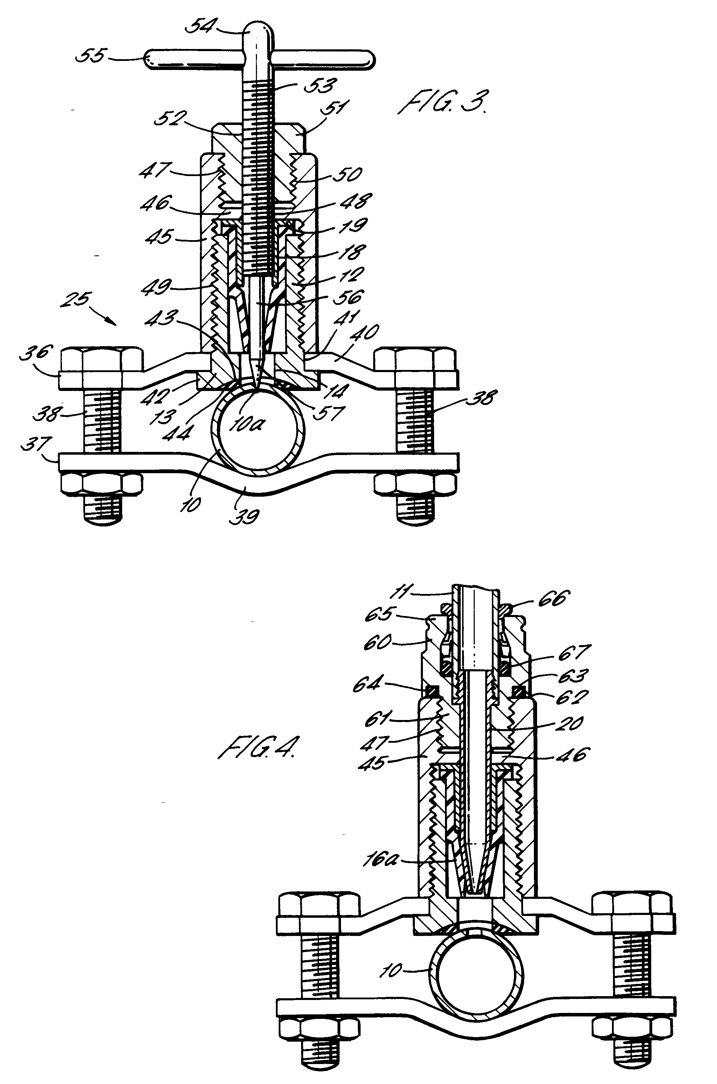

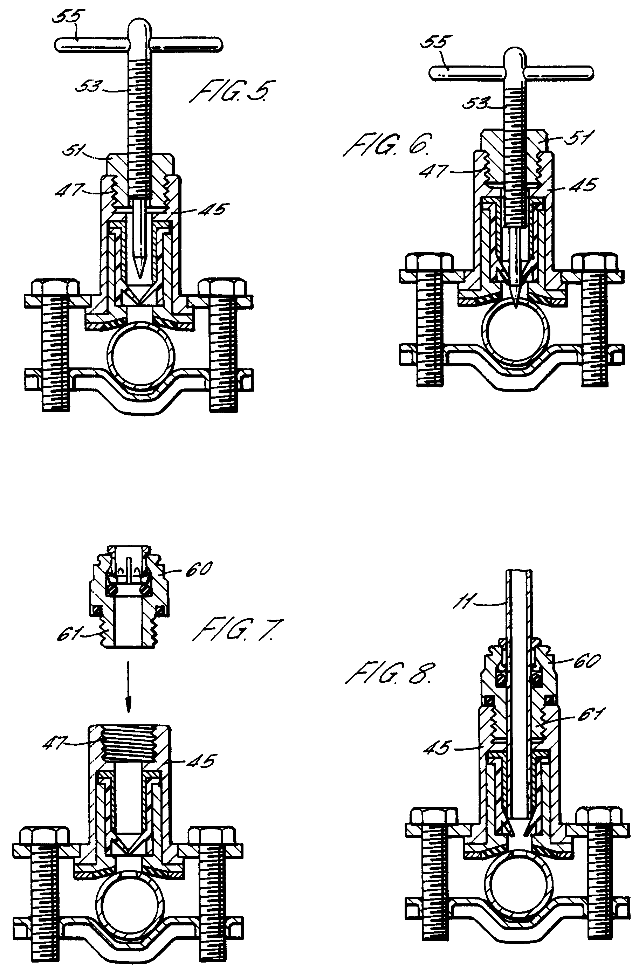

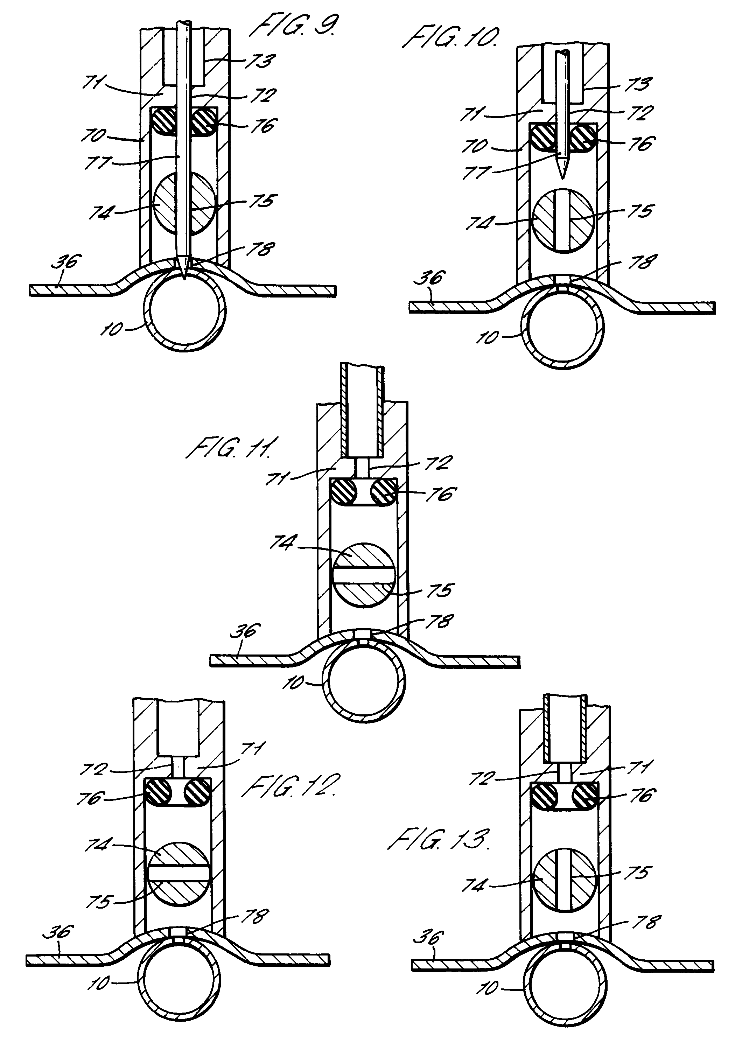

Reference is now made to Figures 3 and 4 of the drawings which show the mounting of the coupling body 12 to a main tube 10 in greater detail. The coupling body 12 is secured to the main tube by means of a saddle clamp arrangement indicated generally at 25. The arrangement comprises upper and lower spaced plates 36, 37 which straddle the tube 10 and are secured together by bolts 38. The lower plate 37 is formed with a central trough-shaped area 39 to engage directly under the tube 10. The upper plate 36 extends above the tube 10 and has a central flat section 40 formed with an aperture 41 to receive the coupling body 12.

The coupling body 12 extends through the central aperture and is formed at its end 13 with an out-turned integral flange 42 which engages under the central section of the plate 40. The face of the end wall 13 of the coupling body is concavely recessed as indicated at 43 and a resilient seal 44 is bonded to the concave recess to engage with the outer surface of the tube 10 around the aperture in the tube. Thus when the bolts 38 connecting the plates of the saddle clamp are tightened to clamp the tube 10 against the end wall of the coupling body, a fluid tight seal is formed between the end wall and tube.

A cylindrical housing 45 is provided to enclose the coupling body 12 projecting from the plate 40. The housing is divided by an internal partition 46 to provide a downwardly open portion in which the coupling body 12 engages and an upwardly open socket 47 which will be referred to below. The partition has a central aperture 48. The lower portion of the housing is formed with an internal screw thread 49 which engages with an external screw thread on the coupling body. The housing is screwed down against the upper surface of the plate 36 to clamp the coupling body firmly to the plate with the out-turned flange 19 of sleeve 18 in the coupling body engaging the underside of the partition 46.

The upwardly open socket 47 at the top of the housing has an internal screw thread 50 in which an externally screw threaded bush 51 is located. The bush has a central screw threaded hole 52 to receive the screw threaded shank 53 of a piercing tool 54. The tool is rotated by a thumb bar 55 at its upper end and has a reduced diameter portion 56 at its lower end which terminates in a tapered point 57 to pierce a hole in the tube 10.

The tool 54 is screwed through the bush 51, partition 46, sleeve 18 and the "ducks bill" portion 16a of the seal which closes around and seals with a tool. The tool is screwed into the coupling body until the pointed end 57 engages and pierces the tube 10 to form the opening 10a in the wall of the tube as described earlier. This operation can be carried out when there is fluid under pressure in the tube since the seal 43 prevents loss of fluid between the tube 10 and end 13 of the connector body and the seal 16, 16a prevents loss of fluid between the connector body and tool.

Referring now to Figure 4 of the drawings, once a hole has been pierced in the tube 10 and the tool 54 extracted, the bush 51 is extracted from the socket and replaced by the self locking tube connector 60 which may be of the type described and illustrated in UK Patent Specification No 1520742. The connector has a reduced diameter spigot 61 at one end formed with an external screw thread to engage in the screw threaded socket 48. The shoulder 62 between the main body of the connector and the spigot 61 is formed with a recess 63 in which an O-ring seal 64 is located to provide a fluid tight seal between the connector body and upper end of the cylindrical housing 45. The connector has an upwardly open throughway 65 in which a collet 66 is mounted to receive and lock the end part of the tube 11 in the connector. The throughway contains an O-ring seal 67 below the collet to seal with the outer surface of the tube 11. The probe 20 is mounted in the connector below the collet/seal and projects through the spigot 61 and aperture in the partition 46 into the connector body 12. The tapered end of the probe extends into the "ducks bill" portion of the seal to create the passageway through the connector body for fluid flow linking the main tube 10 to the subsidiary tube 11 as previously described.

Thus the arrangement provides a simple and convenient way of connecting a subsidiary tube 11 to a main tube 12 even when the latter contains fluid under pressure. Thus a supply conduit for water to a piece of equipment such as a dishwasher or washing machine can readily be connected to a main water pipe without have to switch off the main water supply and drain down the system.

Figures 5 to 8 show the equipment of Figures 3 and 4 in a step by step sequence of application to a main tube, piercing a hole in the main tube, replacing the piercing unit by a tube coupling and connecting a tube through the tube coupling into the tube connector to provide fluid between the main tube and subsidiary tube. In this case the special nozzle 20 is omitted from the tube coupling and the tube 11 itself is pushed through the coupling and partition in the housing to the tube connector to open the seal 16/16a and thereby establish flow between the main tube and subsidiary tube.

In the arrangements described above, the self sealing tube has been described as having a "ducks bill" shaped portion where the side of the tube converge to form a sealed elongate mouth in a modified form of the seal, the walls converge in two places at right angles to one another to form, in effect, a cruciform shape at the end of the seal so that the seal opens in two mutually transverse directions.

Reference is now made to Figure 9 and 13 of the drawings to show a further arrangement using a simplified form of connector body and a different form of valve.

The connector body comprises a downwardly open cylindrical enclosure 70 to engage the top of the upper clamp plate 36 above the tube 10. The enclosure has a internal partition 71 formed with a bore 72 and an upwardly open socket 73 above the partition.

The lower enclosure in the cylindrical body contains a rotary spherical valve 74 having a diametrically extending through passage 75 which can be aligned with the access of the cylindrical body to open the valve as shown in Figures 9, 10 and 13 or rotated by a mechanism not shown to extend transversely of the cylindrical body to close the valve as shown in Figures 11 and 12. An O-ring seal 76 is mounted in the body under the partition 71 to seal the lower enclosure of the body.

The connector body 70 is secured to the tube 10 by the saddle clamp arrangement much as described with reference to Figures 3 and 4 above. A piercing tool 77 is then inserted through the upper socket of the connector body, through the bore 72 in the partition 70, through the O-ring seal 76, through the valve passage 75 and finally through an opening 78 formed in the plate 36 to engage and pierce a hole in the tube 10 as depicted in Figure 9. Once a hole has been pierced in the tube, fluid will flow into the lower part of the connector body 70 past the valve 74 but will be prevented from escaping through the bore 72 in the partition 71 by engagement of the seal 76 with the tool. Once the tool has been withdrawn from the value 74 as indicated in Figure 10, the valve can be rotated to the closed position as illustrated in Figure 11. The tool can then be fully withdrawn from the connector body. The subsidiary tube 11 is then inserted into the socket 73 and secured by a tube coupling such as described and illustrated in our UK Patent Specification No 1520742 and once the tube is in place, the valve 74 can be moved to the open position as shown in Figure 13 to establish flow between the tube 10 and tube 11.

It will be appreciated that many modifications may be made to the above described embodiments without departing from the scope of the invention. For example, in the embodiments of Figures 9 to 13, the ball valve shown may be replaced by any form of valve which in an open position provides a passage through which a probe may pass.

## Claims

1. A tube coupling for connecting one tube to another comprising a coupling body having a throughway, means for connecting the coupling body to respective tubes, a resilient seal having a self-closing orifice mounted in the throughway, the seal being formed so that it is openable by a probe inserted through the orifice in one direction and so that a pressure differential across the seal in the opposite direction biases the seal orifice closed or closed around the probe when the latter is present.

2. A tube coupling as claimed in Claim 1, wherein the self closing seal is of tubular form having a portion in which the tube walls converge to seal together and through which a hollow probe may be inserted for flow of fluid through the coupling body.

3. A tube coupling as claimed in Claim 2, wherein the resilient seal comprises a cylindrical portion terminating in a portion which tapers in one cross section to form an elongate openable "ducks bill" shaped mouth and the probe is insertable through the tubular portion into the tapered portion to open the mouth of the seal.

4. A tube coupling as claimed in Claim 3, wherein a sleeve is mounted within the tubular portion of the seal to support the seal against the wall of the coupling body and to provide a guide for the probe to be inserted through the seal.

5. A tube coupling as claimed in any of the preceding Claims, wherein the probe comprises one of said tubes to be connected together or an extension attached to one of the tubes.

6. A tube coupling as claimed in Claim 5, and in the case where the probe comprises a tube having an extension to be received in the coupling body, wherein the extension comprises a tubular nozzle having a tapered nose portion to engage in and project through the seal orifice.

7. A tube coupling as claimed in any of the preceding Claims, wherein said other end of the coupling body is adapted to bear against a side wall of tube, means are provided for mounting the coupling body on the tube and said end of the coupling body has an aperture to register with an aperture in the tube for flow of fluid between the tube and coupling body and a further seal is provided between said end of the coupling body and tube to prevent loss of fluid between the coupling body and tube.

8. A tube coupling as claimed in Claim 7, wherein the probe comprises a piercing tool to be inserted through the coupling body from said one end prior to connection of a tube to that end, whereby the tool may be used to create an aperture in the side wall of the tube against which the other end of the coupling body bears, the tool being sealed by the self-closing seal to prevent loss of fluid therefrom.

9. A tube coupling for connecting one tube to another comprising, a coupling body having a throughway, one at one end of the body, means for connecting said one end of the coupling body to one side of one tube, a valve for opening and closing the throughway having a passage which is aligned with the throughway in the open position, sealing means mounted in the throughway between said valve and the other end of the throughway to seal with a tool inserted into the throughway from said other end and through the valve to pierce an opening in said one tube, and means to connect another tube to said other end of the coupling body after the tool has been withdrawn for flow between the tubes when the valve is open.

10. A tube coupling as claimed in Claim 9, wherein the valve comprises a rotary ball valve having a diametrically extending passage and means to rotate the ball to move the passage into and out of alignment with the throughway.

11. A tube coupling as claim in Claim 9 or Claim 10, wherein the throughway has a partition extending across the throughway between the valve and said other end forming a socket at said other end to receive said other tube, the seal being located in the throughway between the valve and partition and the partition having an aperture through which the tool can pass.
